# EUROPÄISCHE PATENTANMELDUNG

(11) **EP 3 604 774 A1**
(43) Veröffentlichungstag der Anmeldung: **05.02.2020**
(21) Anmeldenummer: 19187879.2
(22) Anmeldetag: 23.07.2019
(51) Int. Cl.: F02D 13/02, F02B 43/00, F02D 19/02, F02B 29/04, F02B 63/00, F02D 29/06, F02B 31/00

(54) **BLOCKHEIZKRAFTWERK**

(30) Priorität: 31.07.2018 DE 102018118580
(71) Anmelder: 2G Energy AG, 48619 Heek (DE)
(72) Erfinder: Grewe, Frank Joachim, D-48691 Vreden (DE); Warkentin, Paul, D-59348 Lüdinghausen (DE)
(74) Vertreter: Wischmeyer, André

(57) **Zusammenfassung**

Blockheizkraftwerk mit einem Verbrennungsmotor (8) zur Verbrennung von einem in einem stöchiometrischen Verhältnis vorliegenden Gemisch aus einem Brennstoff, insbesondere Erdgas, und Luft in zumindest einem Brennraum (13), wobei der Verbrennungsmotor (8) zumindest einen den Brennraum (13) begrenzenden und in einem Verbrennungszyklus von einer oberen Totpunktlage in eine untere Totpunktlage und zurück bewegbaren Hubkolben sowie zumindest ein an den Brennraum (13) angrenzendes und in dem Verbrennungszyklus von einer Schließstellung in eine Einlassstellung und zurück überführbares Einlassventil aufweist, wobei das Blockheizkraftwerk einen 3-Wege-Katalysator zur Nachbehandlung eines im Verbrennungszyklus aus dem Brennraum (13) ausgestoßenen Abgases umfasst, wobei der Verbrennungsmotor (8) dazu ausgebildet ist, das Einlassventil im Verbrennungszyklus in die Schließstellung zu überführen, bevor oder nachdem der Hubkolben zum Abschluss eines Ansaugtaktes in der unteren Totpunktlage angeordnet ist sowie Verfahren zur Erzeugung von Energie aus einem Brennstoff.

## Beschreibung

Die Erfindung betrifft ein Blockheizkraftwerk mit einem Verbrennungsmotor zur Verbrennung von einem Gemisch aus einem Brennstoff, insbesondere Erdgas, und Luft. Das Gemisch liegt dabei in einem stöchiometrischen Verhältnis vor, und die Verbrennung findet in zumindest einem Brennraum des Verbrennungsmotors statt. Der Verbrennungsmotor hat zumindest einen Hubkolben, der den Brennraum begrenzt und in einem Verbrennungszyklus von einer oberen Totpunktlage in eine untere Totpunktlage und zurück bewegbar ist. Weiterhin weist der Verbrennungsmotor zumindest ein an den Brennraum angrenzendes Einlassventil auf, das in dem Verbrennungszyklus von einer Schließstellung in eine Einlassstellung und zurück überführbar ist. Das Blockheizkraftwerk umfasst einen 3-Wege-Katalysator zur Nachbehandlung eines im Verbrennungszyklus aus dem Brennraum ausgestoßenen Abgases.

Ein derartiges Blockheizkraftwerk ist bekannt aus der DE 10 2016 204 142 A1. Das darin beschriebene Blockheizkraftwerk hat neben dem Brennraum einen Vorbrennraum zur Verbrennung eines ersten Teils des Brennstoffs mit Luftüberschuss (mager). Das dabei entstehende Gemisch aus Abgas und Luft wird anschließend dem Brennraum zugeführt und darin ein zweiter Teil des Brennstoffs bei einem stöchiometrischen Verhältnis von Luft und dem Brennstoff verbrannt. Anschließend wird das gesamte Abgas dem 3-Wege-Katalysator zugeführt.

Nachteilig an dem bekannten Blockheizkraftwerk sind die hohen Temperaturen des bei der stöchiometrischen Verbrennung entstehenden Abgases, wodurch es sowohl zu einer umfangreicheren Entstehung von Stickoxiden (NOₓ) als auch zu einer massiven thermischen Belastung von danach auszulegenden Bauteilen des Verbrennungsmotors kommt. Das aus dem Vorbrennraum in den Brennraum überführte Abgas führt außerdem zu einer unsauberen Verbrennung des Brennstoffs innerhalb des Brennraumes. Der konstruktive Aufwand für die zwei Brennräume ist erheblich.

Aufgabe der vorliegenden Erfindung ist die Bereitstellung eines gattungsgemäßen Blockheizkraftwerkes mit einem hohen Wirkungsgrad, das kostengünstiger hergestellt und betrieben werden kann, sowie eines entsprechend effektiven Verfahrens zur Erzeugung von Energie.

Erfindungsgemäß wird die Aufgabe dadurch gelöst, dass der Verbrennungsmotor dazu ausgebildet ist, das Einlassventil im Verbrennungszyklus in die Schließstellung zu überführen, bevor oder nachdem der Hubkolben zum Abschluss eines Ansaugtaktes in der unteren Totpunktlage angeordnet ist.

Als Blockheizkraftwerke (BHKW) werden Anlagen bezeichnet, die aus einem Brennstoff sowohl elektrische Energie als auch nutzbare Wärme bereitstellen. Insbesondere haben Blockheizkraftwerke einen Verbrennungsmotor sowie einen mechanisch damit gekoppelten Generator zur Erzeugung elektrischer Energie. Zur Kühlung insbesondere des Verbrennungsmotors wird durch dieses ein Arbeitsfluid erhitzt, das im Betrieb insbesondere durch zumindest einen Kühlmittelkanal zumindest des Verbrennungsmotors strömt, und welches seine Wärme etwa zur Beheizung von Gebäuden oder anderer mit dem Blockheizkraftwerk gekoppelter Anlagen insbesondere lokal vom Blockheizkraftwerk entfernt abgibt.

Der Verbrennungsmotor des Blockheizkraftwerkes hat bevorzugt 4, 6, 8 oder 12 Zylinder und eine gleiche Zahl an insbesondere übereinstimmend ausgebildeten Hubkolben und Brennräumen, die jeweils unmittelbar der Verbrennung des Brennstoffs dienen. Durch das Blockheizkraftwerk, insbesondere durch den Generator des Blockheizkraftwerkes, wird im Betrieb eine elektrische Nennleistung von 100 bis 320 KW erzeugt.

Im Betrieb des Blockheizkraftwerkes wird der Verbrennungszyklus wiederholt ausgeführt. Zum Ende eines jeden Verbrennungszyklus ist sowohl das Einlassventil als auch der Hubkolben in einer Ausgangslage angeordnet. Das Einlassventil ist in dieser auch zu Beginn des Verbrennungszyklus angeordnet. Die Verbrennungszyklen schließen dabei im Betrieb unmittelbar und ohne eine Zwischenzeit aneinander an.

Unmittelbar vor der Verbrennung des Gemisches aus Brennstoff und Luft liegen die beiden Komponenten in einem stöchiometrischen Verhältnis im Brennraum vor. Auf dieser Basis wird bei der Verbrennung optimalerweise sämtlicher im Brennraum vorliegender Brennstoff sowie sämtliche im Brennraum vorliegende Luft exotherm zu Abgas umgesetzt. Das Vorliegen des Gemisches in einem stöchiometrischen Verhältnis bedeutet, dass ein Verbrennungs-Luft-Verhältnis bzw. ein Luftverhältnis oder eine Luftzahl Lambda (λ), das/die gleich dem Verhältnis einer für die Verbrennung zur Verfügung stehenden Luftmasse zur mindestens zur Verbrennung des vorliegenden Brennstoffs notwendigen (stöchiometrischen) Luftmasse ist. Im Brennraum gilt unmittelbar vor der Verbrennung insbesondere 0,9 < Lambda < 1,1, bevorzugt 0,99 < Lambda < 1. Zur Regelung des stöchiometrischen Verhältnisses hat das Blockheizkraftwerk insbesondere eine Lambdasonde.

Durch eine Verbrennung des Gemisches bei einem stöchiometrischen Verhältnis ist die Nutzung des 3-Wege-Katalysators ermöglicht. Insbesondere umfasst das Blockheizkraftwerk eine Abgasleitungsanordnung, durch die im Betrieb das Abgas vom Brennraum zum 3-Wege-Katalysator strömt. Im Betrieb werden durch den 3-Wege-Katalysator insbesondere Kohlenstoffmonoxid (CO), Stickoxide (NOₓ) und unverbrannte Kohlenwasserstoffe (HC) umgewandelt zu Kohlenstoffdioxid (CO₂), Stockstoff (N₂) und Wasser (H₂O). Der 3-Wege-Katalysator weist bevorzugt eine Beschichtung, insbesondere einen Washcoat, auf, die aus einer Mischung verschiedener Metalloxide zur katalytischen Anregung der chemischen Reaktionen zur Umsetzung der vorbezeichneten Moleküle dient.

In der Schließstellung des Einlassventils dichtet dieses den Brennraum insbesondere an einem Zylinderkopfelement ab. In der Schließstellung liegt das Einlassventil insbesondere an einem Kolbenring, bevorzugt luftdicht, an. Dadurch wird ein Gasübertritt von dem Brennraum in einen Zuleitungsraum oder umgekehrt zumindest weitestgehend, insbesondere vollständig, vermieden. Mit dem Verlassen der Schließstellung ist das Einlassventil automatisch in der Einlassstellung, so dass das Einlassventil jedenfalls in der Schließstellung oder in der Einlassstellung angeordnet ist. In der Einlassstellung wird insbesondere ein Einströmen von Luft oder von dem Gemisch zu dem Zuleitungsraum in den Brennraum ermöglicht. Bevorzugt wird das Einlassventil bei seiner Überführung von der Schließstellung in die Einlassstellung in Richtung des Hubkolbens verschoben, wobei es schon nach einer geringen Verschiebung aus der Schließstellung die Einlassstellung, in der es weiterhin beweglich ist, erreicht hat.

Teil des im Betrieb wiederholten Verbrennungszyklus ist der Ansaugtakt, während dessen der Hubkolben von seiner oberen Totpunktlage in die untere Totpunktlage bewegt wird. Dadurch wird das Volumen des Brennraumes, das insbesondere durch eine Oberfläche des Hubkolbens begrenzt ist, insbesondere um ein Vielfaches vergrößert, wobei die Richtung der Schwerkraft für die Definition von der oberen und der unteren Totpunktlage ohne Relevanz ist.

Während des Ansaugtaktes ist das Einlassventil zumindest zeitweise in der Einlassstellung angeordnet, wodurch ein Einströmen von Luft bzw. eines Gemisches aus dem Brennstoff und Luft in den Brennraum ermöglicht wird. Insbesondere ist das Einlassventil nicht während des gesamten Ansaugtaktes in der Einlassstellung angeordnet und wird nicht während des gesamten Ansaugtaktes Luft bzw. Gemisch in den Brennraum angesaugt. Bevorzugt folgen dem Ansaugtakt ein Verdichtungstakt, ein Arbeitstakt sowie ein Ausstoßtakt, woraufhin ein erneuter Ansaugtakt folgt.

Erfindungsgemäß ist der Verbrennungsmotor so ausgebildet, dass das Einlassventil von der Einlassstellung in die Schließstellung überführt wird, während der Hubkolben noch nicht oder nicht mehr in seiner unteren Totpunktlage angeordnet ist. Stattdessen wird das Einlassventil im Verbrennungszyklus in die Schließstellung überführt, während der Hubkolben in Bewegung ist. Eine derartige Steuerung des Einlassventils wird gemeinhin als Miller- oder Atkinson-Verfahren bezeichnet.

Beim Miller-Verfahren erreicht das Einlassventil die Schließstellung und verschließt somit den Brennraum, bevor der Hubkolben die untere Totpunktlage erreicht. Zwischen Erreichen der Schließstellung und Erreichen der unteren Totpunktlage sinkt somit innerhalb des Brennraumes der Druck und steigt anschließend, insbesondere im Verdichtungstakt, wieder auf sein Ausgangsniveau und darüber hinaus. Beim Atkinson-Verfahren erreicht das Einlassventil die Schließstellung und verschließt somit den Brennraum erst, nachdem der Hubkolben die untere Totpunktlage erreicht hat. Somit wird ein Teil der Luft bzw. des Gemisches, die/das im Ansaugtakt in den Brennraum geströmt ist, anschließend, insbesondere zu Beginn des Verdichtungstaktes, zurück aus dem Brennraum ausgeschoben.

Vorteil der erfindungsgemäßen Ausgestaltung des Blockheizkraftwerkes ist, dass durch den Zeitpunkt der Überführung des Einlassventils in die Schließstellung bei unverändertem geometrischem Verdichtungsverhältnis eine geringere effektive Verdichtung des Gemisches bzw. der Luft im Brennraum stattfindet. Dadurch kommt es zu einer wesentlich geringeren Hitzeentwicklung bei der Verbrennung, das entstehende Abgas hat somit eine geringere Temperatur. Aufgrund der geringeren Temperaturen wiederum lassen sich Motorbauteile verwenden, die ebenso in konventionellen, den Brennstoff bei magerem Brennstoff-Luft-Verhältnis verbrennenden Blockheizkraftwerken verwendet werden, wodurch die Herstellungskosten für das Blockheizkraftwerk signifikant gesenkt werden können. Insgesamt lässt sich durch die erfindungsgemäße Ausgestaltung des Blockheizkraftwerkes zum einen erreichen, dass bei der Verbrennung entstehende Stickoxide (NOₓ) durch ein insbesondere gegenüber einem verbreitet genutzten SCR-Katalysator, günstigen 3-Wege-Katalysator umgesetzt werden können. Daneben führt die vermiedene Hitzeentwicklung dazu, dass konventionelle Verbrennungsmotorkomponenten verwendet werden können, die relativ kostengünstig zu beziehen sind und hinsichtlich eines hohen Wirkungsgrades weitgehend optimiert sind. Insbesondere lässt sich ein erfindungsgemäßes Blockheizkraftwerk schon bei geringen Leistungsklassen ab 100 KW elektrische Leistung auch bei Einhaltung aktueller und geplanter Stickoxidgrenzwerte effizient betreiben.

Vorzugsweise hat das Blockheizkraftwerk eine im Betrieb zur Umgebung geöffnete Luftzuleitungsanordnung zur Leitung zumindest von Luft aus der Umgebung zum Brennraum. Die Luftzuleitungsanordnung umfasst insbesondere Rohre, flexible Schläuche, Filter, Verdichter und/oder Kühler und reicht bis in den Bereich des Einlassventils. Durch die Luftzuleitungsanordnung wird Frischluft aus der Umgebung dem Brennraum zugeführt. Insbesondere ist das Blockheizkraftwerk frei von einer Abgasüberleitungsanordnung, die den Brennraum mit einem weiteren Brennraum bzw. einem Vorbrennraum verbindet. Gegenüber dem Stand der Technik wird dadurch vermieden, dass sich bei der stöchiometrischen Verbrennung ein Abgas aus einer früheren Verbrennungsstufe im Brennraum befindet. Dadurch wird gegenüber dem Stand der Technik eine reinere, d.h. bessere stöchiometrische Verbrennung ermöglicht, die dadurch einen erhöhten Wirkungsgrad hat. Insbesondere ist das Blockheizkraftwerk nicht zu einer mageren Verbrennung von Brennstoff ausgebildet, wodurch gegenüber dem Stand der Technik eine Mehrzahl von Vorbrennräumen obsolet wird, wodurch wiederum die Konstruktion des Blockheizkraftwerkes signifikant vereinfacht wird.

In einer vorteilhaften Ausgestaltung der Erfindung hat das Blockheizkraftwerk zumindest eine Verdichtervorrichtung, die relativ zum Brennraum stromaufwärts angeordnet ist. Die Verdichtervorrichtung dient zur Verdichtung zumindest von Luft und ist insbesondere als Abgasturbolader mit einem Verdichterrad in der Luftzuleitungsanordnung ausgebildet. Die Verdichtervorrichtung ist insofern stromaufwärts angeordnet, als dass im Betrieb Luft und/oder ein Brennstoff-Luft-Gemisch von der Verdichtervorrichtung zum Brennraum, insbesondere durch die Luftzuleitungsanordnung, strömt. Durch die Verdichtervorrichtung wird die Luft bzw. das Brennstoff-Luft-Gemisch verdichtet, welches somit stromabwärts der Verdichtervorrichtung einen größeren Druck hat als stromaufwärts der Verdichtervorrichtung. Im Betrieb rotiert das Verdichterrad insbesondere mit einer Mehrzahl von Verdichterschaufeln um eine Verdichtervorrichtungsrotationsachse. Alternativ zum Abgasturbolader ist die Verdichtervorrichtung bevorzugt als nicht von einem Abgasstrom angetriebener Kompressor ausgebildet.

Durch die Verdichtervorrichtung wird erreicht, dass bei Befinden des Einlassventils in seiner Einlassstellung eine größere Masse an Luft bzw. an dem Brennstoff-Luft-Gemisch in den Brennraum gelangt. Dadurch wird ein Effekt des Miller- bzw. Atkinson-Verfahrens, das das tatsächliche Verdichtungsverhältnis innerhalb des Brennraumes herabsetzt, insofern ausgeglichen, als dass ein Teil der Gesamtverdichtung durch die vorgeordnete Verdichtervorrichtung übernommen wird. Dadurch wird bei Erhalt der vorbeschriebenen Vorteile der erfindungsgemäßen Ausgestaltung des Blockheizkraftwerkes sowohl dessen Leistung pro Hubraum als auch dessen Wirkungsgrad erhöht. Insbesondere ist aufgrund der höheren Gesamtverdichtung ein hinsichtlich seines Volumens kleinerer und somit weniger materialaufwändiger Verbrennungsmotor bereits ausreichend, um eine beabsichtigte elektrische Leistung bei einem ausreichenden Wirkungsgrad zu erzeugen.

Bevorzugt weist der Verbrennungsmotor eine Ventilsteueranordnung auf. Diese ist so ausgebildet, dass eine sich im Betrieb drehende Kurbelwelle bei der Überführung des Einlassventils in die Schließstellung einen Schließkurbelwinkel aufweist, der sich von einem UT2-Kurbelwinkel der Kurbelwelle zum Abschluss des Ansaugtaktes von insbesondere 540° um zumindest 10°, bevorzugt um zumindest 20°, besonders bevorzugt um zumindest 30°, unterscheidet. Während eines jeden Verbrennungszyklus rotiert die Kurbelwelle um einen bestimmten Gesamtwinkel von insbesondere 720°, wobei die Kurbelwelle pro Verbrennungszyklus einmal den Schließkurbelwinkel und ebenso einmal den UT2-Kurbelwinkel erreicht. Als UT2-Kurbelwinkel wird eine Position der Kurbelwelle bezeichnet, bei der sich der Hubkolben, insbesondere zum zweiten Mal im selben Verbrennungszyklus, in seiner unteren Totpunktlage befindet, die er zum Abschluss des Ansaugtaktes erreicht. Der Schließkurbelwinkel ist größer oder kleiner als der UT2-Kurbelwinkel. Durch ein derartiges Abweichen des Zeitpunktes bzw. der Kurbelwinkelstellung bei Überführung des Einlassventils in die Schließstellung von dem Zeitpunkt bzw. der Kurbelwinkelstellung im unteren Totpunkt des Hubkolbens wird der Effekt des Miller- bzw. Atkinson-Verfahrens besonders umfangreich erzeugt, wobei sich der Schließkurbelwinkel vom UT2-Kurbelwinkel um maximal 170°, insbesondere um maximal 90°, unterscheidet.

Besonders bevorzugt beträgt der Schließkurbelwinkel weniger als 540°, insbesondere zwischen 485° und 505°, bevorzugt zwischen 490° und 500°, besonders bevorzugt zwischen 494° und 497°. Dabei wird von einer Ausbildung des Verbrennungsmotors zu einem 4-Takt-Verbrennungsverfahren ausgegangen, bei dem die Kurbelwelle pro Verbrennungszyklus um 720° rotiert. Pro Takt im Verbrennungszyklus, auch pro Ansaugtakt, rotiert die Kurbelwelle insbesondere um 180°. Bei Beginn eines Verbrennungszyklus hat die Kurbelwelle einen Ausgangskurbelwinkel von 0° und insbesondere nach einem Arbeitstakt (180°) und einem Ausstoßtakt (180°) einen Zwischenkurbelwinkel von 360°, auf die der Ansaugtakt folgt, in dem die Kurbelwelle den UT2-Kurbelwinkel erreicht.

Die Kurbelwelle ist insbesondere über eine Pleuelstange mit dem zumindest einen Hubkolben gekoppelt. Die Kurbelwelle ist insbesondere mit einer Nockenwelle, die bevorzugt zumindest eine Nocke pro Einlassventil und/oder Brennraum des Verbrennungsmotors umfasst, mechanisch gekoppelt. Während die Kurbelwelle pro Verbrennungszyklus um einen Winkel von 720° rotiert, rotiert die Nockenwelle dabei lediglich um 360°. In der Einlassstellung des Einlassventils liegt insbesondere zumindest eine Nocke der Nockenwelle am Einlassventil an und übt eine Kraft darauf aus, während in der Schließstellung insbesondere kein Kontakt zwischen Nockenwelle bzw. einer Nocke und dem Einlassventil vorliegt.

Durch die Nutzung des Miller-Verfahrens statt des Atkinson-Verfahrens werden Verluste vermieden, die durch das beim Atkinson-Verfahren gegebene Zurückschieben der Luft bzw. des Gemisches aus dem Brennraum in die Luftzuleitungsanordnung entstehen. Insofern ist das Miller-Verfahren für den Wirkungsgrad des Blockheizkraftwerkes vorteilhaft. Durch einen Schließkurbelwinkel von 485° bis 505° wird eine signifikante Reduzierung der Maximaltemperatur im Brennraum erreicht. Durch einen Schließkurbelwinkel zwischen 490° und 500° wird zudem eine eine ausreichende Leistung des Blockheizkraftwerkes sicherstellende tatsächliche Verdichtung der Luft bzw. des Gemisches erreicht. Durch einen Schließkurbelwinkel von 494° bis 497°, insbesondere von 495° oder 496°, wird ein optimaler Kompromiss zwischen Reduzierung der Maximaltemperatur und einem hohen Wirkungsgrad des Blockheizkraftwerkes erreicht.

Die angegebenen Schließkurbelwinkel sind diejenigen, bei denen insbesondere ein Ventilspiel des Einlassventils von im Wesentlichen 0,4 mm berücksichtigt ist. Bei Nichtberücksichtigung des Ventilspiels erhöht sich der Schließkurbelwinkel um zumindest im Wesentlichen, insbesondere exakt 20° gegenüber der Angabe mit Berücksichtigung des Ventilspiels (besonders bevorzugt beträgt der Schließkurbelwinkel dann 514° bis 517°, insbesondere 515° oder 516°).

Vorzugsweise beträgt ein Ventilüberschneidungswinkel, den die Kurbelwelle zur Überführung des Einlassventils in die Einlassstellung und bis zu einer Schließung eines Auslassventils überstreicht, 10° bis 30°, insbesondere zumindest im Wesentlichen 20°. Dadurch wird insbesondere bei der Verbrennung von Erdgas vermieden, dass Gemisch aus der Luftzuleitungsanordnung durch den Brennraum in die Abgasleitungsanordnung strömt, wodurch der Wirkungsgrad deutlich reduziert wäre.

Bevorzugt ist der Schließkurbelwinkel im Betrieb des Verbrennungsmotors unveränderlich. Insbesondere ermöglicht der Verbrennungsmotor den Verzicht auf eine im Betrieb variable Nockenwellen- oder Einlassventilsteuerung. Somit ist der Schließkurbelwinkel bzw. der Zeitpunkt des Erreichens der Schließstellung des Einlassventils während des Verbrennungszyklus konstant. Dadurch wird ein besonders einfacher Aufbau des Verbrennungsmotors, insbesondere der Ventilsteueranordnung, erreicht, wodurch die Herstellungskosten besonders gering gehalten werden können. In anderen Anwendungsfällen von Verbrennungsmotoren gegebene Vorteile eines vorliegend nicht gegebenen, veränderlichen Schließkurbelwinkels sind aufgrund des weitestgehend stationär bei Nennleistung betriebenen Blockheizkraftwerkes ohnehin vernachlässigbar.

Besonders bevorzugt weist die Luftzuleitungsanordnung eine relativ zur Verdichtervorrichtung insbesondere stromaufwärts angeordnete Einspritzeinrichtung zur Einspritzung von Brennstoff in die Luft zur Erzeugung des Gemisches auf. An die Einspritzeinrichtung ist ein Brennstoffreservoir angeschlossen, aus dem pro Verbrennungszyklus ein Teil des Brennstoffes in die Luftzuleitungsanordnung eingespritzt wird. Durch die Einspritzung des Brennstoffs vor Erreichen des Brennraumes kommt es zu einer besonders guten Vermischung von Brennstoff und Luft bereits vor, spätestens mit Erreichen des Brennraumes. Dadurch wird eine besonders homogene Verbrennung und entsprechend ein hoher Wirkungsgrad des Blockheizkraftwerkes erreicht. Durch die Einspritzung des Brennstoffes bereits stromaufwärts der Verdichtervorrichtung wird erreicht, dass dadurch neben der Luft auch der insbesondere gasförmige Brennstoff verdichtet wird, wodurch wiederum die Leistung des Blockheizkraftwerkes weiter erhöht wird. Außerdem wird dadurch eine Einspritzdüse im Bereich des Brennraumes obsolet, wodurch eine weniger aufwändige Konstruktion insbesondere des Zylinderkopfes ermöglicht ist.

In einer vorteilhaften Ausgestaltung der Erfindung weist die Luftzuleitungsanordnung zumindest eine, insbesondere genau eine, Luftkühlungseinheit zur Kühlung der Luft bzw. des Gemisches auf. Im Betrieb ist ein von einem Kühlmittel zu durchströmender Kühlmittelkanal der Luftkühlungseinheit insbesondere an einen Kühlmittelkanal des Verbrennungsmotors angeschlossen. Die Luftkühlungseinheit ist entlang des Luft- bzw. Gemischstromes insbesondere zwischen der Verdichtervorrichtung und dem Brennraum angeordnet. Durch die Luftkühlungseinheit kann eine Erhitzung der Luft bzw. des Gemisches, die mit der Verdichtung derer bzw. dessen in der Verdichtervorrichtung einhergeht, rückgängig gemacht werden und dadurch die Temperatur des Abgases im Verbrennungsraum letztlich weiter reduziert werden. Dazu wird die Luft bzw. das Gemisch insbesondere von 120°C auf zumindest im Wesentlichen 80°C reduziert. Durch Anschluss des Kühlmittelkanals der Luftkühlungseinheit an den Kühlmittelkanal des Verbrennungsmotors wird auch die in der Luftkühlungseinheit aufgenommene Wärme als thermische Energie des Kühlmittels, das insbesondere gleich dem Arbeitsfluid ist, nutzbar gemacht.

Bevorzugt sind eine Einlassventilbewegungsrichtung, in die das Einlassventil zur Überführung aus der Schließstellung in die Einlassstellung überführbar ist, und eine Hubkolbenbewegungsrichtung, in die der Hubkolben im Betrieb verschieblich ist, um mehr als 20°, insbesondere um mehr als 25°, bevorzugt um 30°, zueinander verschwenkt. Durch dieses Ausmaß der Verschwenkung wird erreicht, dass die Luft bzw. das Gemisch aus der Luftzuleitungsanordnung bei nur minimalen Strömungsverlusten in den Brennraum eintreten kann. Insbesondere wird ein Drall des Gemisches im Brennraum, welcher bei magerer Verbrennung des Brennstoffs gewünscht ist, zugunsten geringerer Strömungsverluste vermieden. Dadurch kann zum einen der Wirkungsgrad des Blockheizkraftwerkes weiter erhöht werden und zum anderen die Einlassventile einfacher am Zylinderkopf gelagert werden. Die den Bewegungsrichtungen entsprechenden Bewegungsachsen sind dabei insbesondere windschief zueinander und die Verschwenkung begrenzt auf höchstens 90°, insbesondere auf höchstens 45°.

Besonders bevorzugt hat das Blockheizkraftwerk eine relativ zum Brennraum stromabwärts angeordnete Abgasleitungsanordnung mit zumindest einer Abgaskühlungseinheit, umfassend einen im Betrieb von einem Kühlmittel durchströmten Kühlmittelkanal, zur Kühlung des Abgases. Der Kühlmittelkanal ist insbesondere wiederum angeschlossen an den Kühlmittelkanal des Verbrennungsmotors. Durch die weitere Kühlung des Abgases nach Austreten aus dem Brennraum wird erreicht, dass bei der Herstellung des Blockheizkraftwerkes konventionelle Turbolader verwendet werden können. Außerdem kann ein erhöhter Anteil der entstehenden thermischen Energie nutzbar gemacht werden.

Vorzugsweise weist die Verdichtervorrichtung ein im Betrieb vom Abgas angetriebenes Turbinenrad auf. Dabei weist ein das Turbinenrad umgebendes Turbinengehäuseelement und/oder ein an einem Drehlager angeordnetes Lagergehäuseelement zumindest einen Kühlmittelkanal zur Leitung eines Kühlmittels auf. Durch die so ermöglichte Kühlung des Turboladers bzw. des Turboladergehäuses sind auch besonders hohe Drehzahlen des Turboladers ermöglicht, die die Leistung sowie den Wirkungsgrad des Blockheizkraftwerkes erhöhen. Das Turbinenrad befindet sich dabei insbesondere stromabwärts der Abgaskühlungseinheit.

Die Aufgabe wird erfindungsgemäß weiterhin durch ein Verfahren zur Erzeugung von Energie aus einem Brennstoff, insbesondere aus Erdgas, mit einem Verbrennungsmotor eines Blockheizkraftwerkes, insbesondere eines vorbeschriebenen Blockheizkraftwerkes, erreicht. Das Verfahren umfasst wiederholt Verbrennungszyklen, die die folgenden Schritte umfassen:
Überführen des Einlassventils in die Einlassstellung zum Einlassen zumindest von Luft in den Brennraum des Verbrennungsmotors,
Überführen des Einlassventils in die Schließstellung, bevor oder nachdem der den Brennraum begrenzende Hubkolben eine untere Totpunktlage zum Abschluss eines Ansaugtaktes erreicht,
Entzünden eines in stöchiometrischem Verhältnis gemischten Gemisches aus dem Brennstoff und Luft zu einer Verbrennung des Gemisches,
Leiten eines bei der Verbrennung entstehenden Abgases durch einen 3-Wege-Katalysator.

Insbesondere wird durch das Einlassventil in der Einlassstellung Luft oder das Gemisch aus Brennstoff und Luft in den Brennraum eingelassen. Dabei wird das Einlassventil von der Schließstellung in die Einlassstellung überführt, bevor, während oder nachdem der Hubkolben die obere Totpunktlage zum Beginn des Ansaugtaktes erreicht.

Vorteil des erfindungsgemäßen Verfahrens ist eine reduzierte maximale Temperatur, die während des Verbrennungszyklus innerhalb des Brennraumes auftritt. Dadurch kommt es zu einer geringeren Bauteilbelastung und werden konventionelle Verbrennungsmotorbauteile trotz der durch die stöchiometrische Verbrennung erhöhten Temperaturen nutzbar. Gleichzeitig wird die Nutzung des verhältnismäßig kostengünstigen 3-Wege-Katalysators statt eines alternativen SCR-Katalysators zur Reinigung des Abgases insbesondere von NOₓ-Bestandteilen. Besonders bevorzugt wird das Einlassventil in die Schließstellung überführt, bevor der Hubkolben die untere Totpunktlage zum Abschluss des Ansaugtaktes erreicht, da somit ein Rückströmen von Luft bzw. Gemisch aus dem Brennraum verhindert wird und somit der Wirkungsgrad der Blockheizkraftwerkes erhöht wird.

Vorzugsweise rotiert eine Kurbelwelle zwischen dem Überführen des Einlassventils in die Schließstellung und dem Erreichen des Hubkolbens der unteren Totpunktlage zum Abschluss des Ansaugtaktes um eine Winkeldifferenz von zwischen 30° und 60°. Dadurch kann besonders wirksam die maximale Temperatur im Brennraum reduziert werden. Bevorzugt liegt die Winkeldifferenz zwischen 40° und 50°. Dabei kann neben der Temperaturreduzierung eine vorteilhafte Leistung des Blockheizkraftwerkes erreicht werden. Besonders bevorzugt liegt die Winkeldifferenz zwischen 43° und 46°, insbesondere bei 44° oder 45°, wodurch ein optimaler Kompromiss zwischen Leistung, Wirkungsgrad und Temperaturbelastung des Verbrennungsmotors erreicht ist.

In einer vorteilhaften Ausgestaltung der Erfindung werden der Brennstoff und die Luft zum Gemisch vermischt, bevor das Gemisch mit zumindest einem Verdichter verdichtet wird. Durch die Gemischbildung vor der Verdichtung des Gemisches wird zum einen erreicht, dass Luft und Brennstoff optimal und homogen vermischt werden, wodurch eine weitestgehend vollständige Verbrennung des Gemisches im Brennraum und ein damit einhergehender hoher Wirkungsgrad erreicht wird. Durch die Verdichtung sowohl der Luft als auch des Brennstoffs kann die Leistung des Blockheizkraftwerkes besonders wirksam erhöht werden.

Bevorzugt wird das Gemisch nach dem Verdichten und vor der Verbrennung insbesondere durch die Luftkühlungseinheit auf höchstens 100°C, insbesondere auf höchstens 90°C, bevorzugt höchsten 85°C, gekühlt. Nach dem Verdichten und vor Erreichen der Luftkühlungseinheit hat das Gemisch dabei insbesondere eine Temperatur von mindestens 110°C, insbesondere von zumindest im Wesentlichen 120°C. Das Gemisch wird auf minimal 30°C gekühlt. Durch die Kühlung wird eine weitere Absenkung der bei der Verbrennung auftretenden maximalen Temperatur im Brennraum erreicht sowie außerdem ein höherer Füllgrad des Brennraumes mit dem Gemisch erreicht, der zu einer erhöhten Leistung sowie zu einem erhöhten Wirkungsgrad des Blockheizkraftwerkes führt.

Weitere Vorteile und Einzelheiten der Erfindung sind nachfolgend beschrieben. Insbesondere schematisch dargestellt zeigt:
- Fig. 1: eine Ansicht eines erfindungsgemäßen Blockheizkraftwerks,
- Fig. 2: eine Prinzipdarstellung von Teilen des Gegenstandes nach Fig. 1,
- Fig. 3: eine Ventilerhebungskurve des Gegenstands nach der Erfindung.

Gleich oder ähnlich wirkende Teile sind - sofern dienlich - mit identischen Bezugsziffern versehen. Einzelne technische Merkmale der nachfolgend beschriebenen Ausführungsbeispiele können auch mit den Merkmalen der vorbeschriebenen Ausführungsbeispiele zu erfindungsgemäßen Weiterbildungen führen.

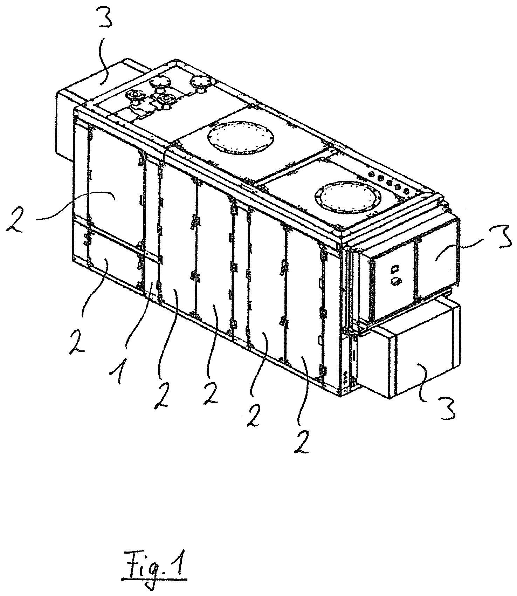

Ein erfindungsgemäßes Blockheizkraftwerk ist in Container-Bauform ausgebildet (Fig. 1). Der Aufbau mit genormten Maßen erleichtert den Transport per Lastkraftwagen oder Schiff zum Einsatzort. Ein Gehäuse 1 ist mit als Türen ausgebildeten, vorzugsweise abnehmbaren Seitenteilen 2 versehen, die den Zugriff auf und somit die Wartung von innenliegenden Teile des Blockheizkraftwerks ermöglichen. Anbauteile 3 können ebenfalls abnehmbar ausgebildet sein und somit separat transportiert und am Einsatzort montiert werden.

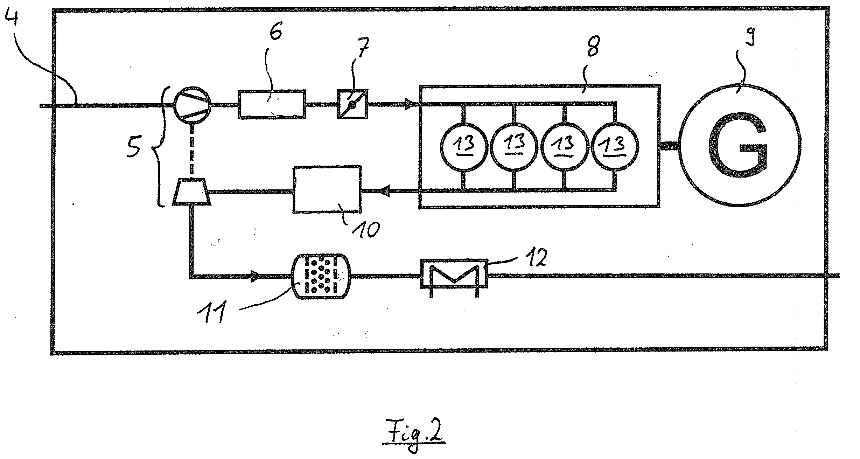

Das Blockheizkraftwerk nach Fig. 1 weist insbesondere die in Fig. 2 gezeigten Komponenten auf. Über eine einer Luftzuleitungsanordnung zuzuordnende Leitung 4 wird das Luft-Brennstoff-Gemisch zu einer Verdichtervorrichtung 5 geführt, die vorliegend als Turbolader ausgebildet ist. Nach der Verdichtung erfolgt eine Kühlung des Gemisches mittels einer ebenfalls der Luftzuleitungsanordnung zuzurechnenden Luftkühlungseinheit 6. Über eine optional vorsehbare Drosselklappe 7 wird das Gemisch zu den Brennräumen des vorliegend als 4-Zylindermotor ausgebildeten verbrennungsmotors 8 geleitet, der wiederum einen Generator 9 antreibt.

Nach der Verbrennung des stöchiometrischen Gemisches wird mittels einer Abgasleitungsanordnung aus den Brennräumen ausgetriebenes Abgas über eine Abgaskühlungseinheit 10 zur Turbinenseite des Turboladers geleitet und von dort weiter zu einem 3-Wege-Katalysator 11. Anschließend wird das Abgas über einen optionalen Wärmetauscher 12 abgegeben.

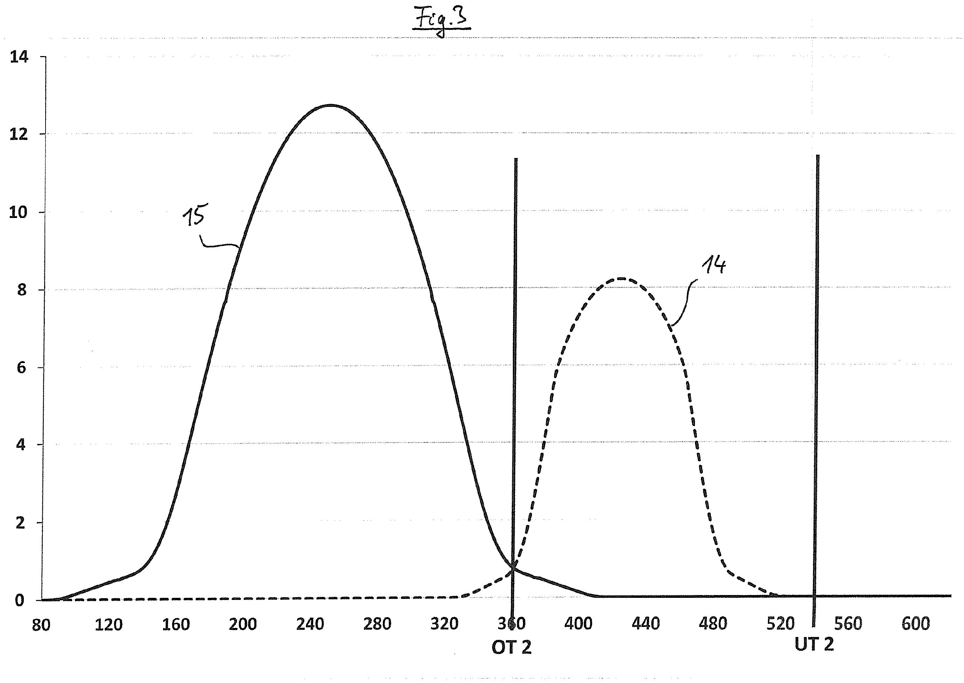

Nach einem Ausführungsbeispiel der Erfindung wird der Motor so ausgelegt, dass ein Einlassventil bereits vor dem Erreichen des unteren Totpunkts UT2 geschlossen ist (Fig. 3). Der auf der y-Achse abgetragene Ventilhub eines Einlassventils (gestrichelte Kurve 14) eines der Brennräume 13 ist bereits auf Null (ohne Berücksichtigung des Ventilspiels), bevor der Hubkolben seinen unteren Totpunkt UT2 bei einem Winkel von 540° erreicht. Das Einlassventil ist bereits bei 520° geschlossen. Daher wird im Brennraum der Druck zunächst abgesenkt, bevor er im Verdichtungstakt wieder ansteigt. Insgesamt kommt es u.a. zu der vorbeschriebenen geringeren Hitzeentwicklung bei der Verbrennung und das Abgas hat eine geringere Temperatur.

Ein Auslassventil (durchgezogene Kurve 15) und das Einlassventil weisen beim oberen Totpunkt OT2 des Hubkolbens einen Ventilüberschneidungswinkel, den die Kurbelwelle zur Überführung des Einlassventils in die Einlassstellung und bis zu einer Schließung eines Auslassventils überstreicht, von rund 70° auf, dieser ist vorzugsweise allerdings zur Erhöhung der Effizienz des erfindungsgemäßen Verfahrens auf 10° bis 30°, insbesondere zumindest im Wesentlichen 20°, zu reduzieren.

## Patentansprüche

1. Blockheizkraftwerk mit einem Verbrennungsmotor (8) zur Verbrennung von einem in einem stöchiometrischen Verhältnis vorliegenden Gemisch aus einem Brennstoff, insbesondere Erdgas, und Luft in zumindest einem Brennraum (13), wobei der Verbrennungsmotor (8) zumindest einen den Brennraum (13) begrenzenden und in einem Verbrennungszyklus von einer oberen Totpunktlage in eine untere Totpunktlage und zurück bewegbaren Hubkolben
sowie zumindest ein an den Brennraum (13) angrenzendes und in dem Verbrennungszyklus von einer Schließstellung in eine Einlassstellung und zurück überführbares Einlassventil aufweist,
wobei das Blockheizkraftwerk einen 3-Wege-Katalysator zur Nachbehandlung eines im Verbrennungszyklus aus dem Brennraum (13) ausgestoßenen Abgases umfasst, **dadurch gekennzeichnet, dass** der Verbrennungsmotor (8) dazu ausgebildet ist, das Einlassventil im Verbrennungszyklus in die Schließstellung zu überführen, bevor oder nachdem der Hubkolben zum Abschluss eines Ansaugtaktes in der unteren Totpunktlage angeordnet ist.

2. Blockheizkraftwerk nach Anspruch 1, **gekennzeichnet durch** eine im Betrieb zur Umgebung geöffnete Luftzuleitungsanordnung zur Leitung zumindest von Luft aus der Umgebung zum Brennraum (13), wobei das Blockheizkraftwerk insbesondere frei ist von einer den Brennraum (13) mit einem weiteren Brennraum (13) verbindenden Abgasüberleitungsanordnung.

3. Blockheizkraftwerk nach Anspruch 1 oder 2, **gekennzeichnet durch** zumindest eine relativ zum Brennraum (13) stromaufwärts angeordnete Verdichtervorrichtung (5) zur Verdichtung zumindest von Luft, die insbesondere als Abgasturbolader mit einem Verdichterrad in der Luftzuleitungsanordnung ausgebildet ist.

4. Blockheizkraftwerk nach einem der vorhergehenden Ansprüche, **dadurch gekennzeichnet, dass** der Verbrennungsmotor (8) eine derart ausgebildete Ventilsteueranordnung aufweist, dass eine sich im Betrieb drehende Kurbelwelle bei der Überführung des Einlassventils in die Schließstellung einen Schließkurbelwinkel aufweist, der sich von einem UT2-Kurbelwinkel der Kurbelwelle zum Abschluss des Ansaugtaktes von insbesondere 540° um zumindest 10°, bevorzugt um zumindest 20°, besonderes bevorzugt um zumindest 30°, unterscheidet.

5. Blockheizkraftwerk nach Anspruch 4, **dadurch gekennzeichnet, dass** der Schließkurbelwinkel weniger als 540°, insbesondere zwischen 485° und 505°, bevorzugt zwischen 490° und 500°, besonders bevorzugt zwischen 494° und 497°, beträgt.

6. Blockheizkraftwerk nach Anspruch 4 oder 5, **dadurch gekennzeichnet, dass** im Betrieb des Verbrennungsmotors (8) der Schließkurbelwinkel unveränderlich ist.

7. Blockheizkraftwerk nach einem der vorhergehenden Ansprüche unter Einschluss von Anspruch 2, **dadurch gekennzeichnet, dass** die Luftzuleitungsanordnung eine relativ zur Verdichtervorrichtung (5) insbesondere stromaufwärts angeordnete Einspritzeinrichtung zur Einspritzung von Brennstoff in die geleitete Luft zur Erzeugung des Gemisches aufweist.

8. Blockheizkraftwerk nach einem der vorhergehenden Ansprüche unter Einschluss von Anspruch 2, **dadurch gekennzeichnet, dass** die Luftzuleitungsanordnung zumindest eine, insbesondere genau eine, Luftkühlungseinheit (6) zur Kühlung der Luft bzw. des Gemisches aufweist, wobei ein im Betrieb von einem Kühlmittel zu durchströmender Kühlmittelkanal der Luftkühlungseinheit (6) insbesondere an einen Kühlmittelkanal des Verbrennungsmotors angeschlossen ist.

9. Blockheizkraftwerk nach einem der vorhergehenden Ansprüche, **dadurch gekennzeichnet, dass** das Einlassventil in eine Einlassventilbewegungsrichtung und der Hubkolben in eine Hubkolbenbewegungsrichtung verschieblich ist, die zur Einlassventilbewegungsrichtung um mehr als 20°, insbesondere um mehr als 25°, bevorzugt um 30°, verschwenkt ist.

10. Blockheizkraftwerk nach einem der vorhergehenden Ansprüche, **gekennzeichnet durch** eine relativ zum Brennraum (13) stromabwärts angeordnete Abgasleitungsanordnung mit zumindest einer Abgaskühlungseinheit (10), umfassend einen im Betrieb von einem Kühlmittel zu durchströmenden Kühlmittelkanal, zur Kühlung des Abgases.

11. Blockheizkraftwerk nach einem der vorhergehenden Ansprüche unter Einschluss des Anspruchs 3, **dadurch gekennzeichnet, dass** die Verdichtervorrichtung (5) ein im Betrieb vom Abgas angetriebenes Turbinenrad aufweist, wobei ein das Turbinenrad umgebendes Turbinengehäuseelement und/oder ein an einem Drehlager angeordnetes Lagergehäuseelement zumindest einen Kühlmittelkanal zur Leitung eines Kühlmittels aufweist.

12. Verfahren zur Erzeugung von Energie aus einem Brennstoff, insbesondere aus Erdgas, mit einem Verbrennungsmotor (8) eines Blockheizkraftwerkes, insbesondere nach einem der vorhergehenden Ansprüche, umfassend wiederholte Verbrennungszyklen, die die folgenden Schritte umfassen:
Überführen eines Einlassventils in eine Einlassstellung zum Einlassen zumindest von Luft in einen Brennraum (13) des Verbrennungsmotors (8),
Überführen des Einlassventils in eine Schließstellung, bevor oder nachdem ein den Brennraum (13) begrenzender Hubkolben eine untere Totpunktlage zum Abschluss eines Ansaugtaktes erreicht,
Entzünden eines in stöchiometrischem Verhältnis gemischten Gemisches aus dem Brennstoff und Luft zu einer Verbrennung des Gemisches,
Leiten eines bei der Verbrennung entstehenden Abgases durch einen 3-Wege-Katalysator.

13. Verfahren nach Anspruch 12, **dadurch gekennzeichnet, dass** zwischen dem Überführen des Einlassventils in die Schließstellung und dem Erreichen der unteren Totpunktlage zum Abschluss des Ansaugtaktes durch den Hubkolben eine Kurbelwelle um eine Winkeldifferenz von zwischen 30° und 60°, bevorzugt zwischen 40° und 50°, besonders bevorzugt zwischen 43° und 46°, rotiert.

14. Verfahren nach Anspruch 12 oder 13, **dadurch gekennzeichnet, dass** der Brennstoff und die Luft zum Gemisch vermischt werden und danach das Gemisch mit zumindest einer Verdichtervorrichtung (5) verdichtet wird.

15. Verfahren nach einem der Ansprüche 12 bis 14, **dadurch gekennzeichnet, dass** das Gemisch nach dem Verdichten und vor der Verbrennung insbesondere durch die Luftkühlungseinheit (6) auf höchstens 100°C, insbesondere höchstens 90°C, bevorzugt höchstens 85°C, gekühlt wird.
